# EUROPEAN PATENT APPLICATION

(11) **EP 4 759 492 A1**
(43) Date of publication of application: **17.06.2026**
(21) Application number: 24865517.7
(22) Date of filing: 12.09.2024
(51) Int. Cl.: B25J 13/00, G05B 19/05

(54) **ROBOT SYSTEM, MANUFACTURING METHOD, AND PROGRAM**

(30) Priority: 12.09.2023 US 202363582233 P
(71) Applicant: Kabushiki Kaisha Yaskawa Denki, Kitakyushu-shi, Fukuoka 806-0004 (JP)
(72) Inventor: MORISAKI, Keita, Kitakyushu-shi, Fukuoka 806-0004 (JP); ARITA, Yuta, Kitakyushu-shi, Fukuoka 806-0004 (JP); MAEDA, Takahiro, Kitakyushu-shi, Fukuoka 806-0004 (JP)
(74) Representative: Viering, Jentschura & Partner mbB Patent- und Rechtsanwälte
(86) International application number: PCT/JP2024/032709
(87) International publication number: WO 2025/058017

(57) **Abstract**

A robot system 1 includes a robot drive device 100 that drives a robot 10, and a computing device 200 that performs network communication with the robot drive device 100 and is capable of executing an application 211 necessary for control of the robot 10 in the robot drive device 100, wherein the computing device 200 has a robot service 213 that, upon any one of a plurality of computing APIs 212, which are APIs callable by the application 211, being called, executes processing according to the called computing API 212, and relays communication between the application 211 and the robot drive device 100 according to the content of the processing to be executed.

## Description

### Technical Field

The present disclosure relates to a robot system, a manufacturing method, and a program.

### Background Art

Patent Literature 1 discloses a motion control device in which a non-real-time OS and a real-time OS are installed and which performs motion control of a device to be controlled. The motion control device has a shared memory that can be commonly referenced and written to from each functional unit on the non-real-time OS side and each functional unit on the real-time OS side.

### Citation List

### Patent Literature

[Patent Literature 1] Japanese Unexamined Patent Publication No. 2019-220135

### Summary of Invention

### Technical Problem

According to the present disclosure, a system beneficial for functional expansion of a robot can be provided.

### Solution to Problem

A robot system according to one aspect of the present disclosure includes: a robot drive device configured to drive a robot; and a computing device configured to perform network communication with the robot drive device and capable of executing an application necessary for control of the robot by the robot drive device, wherein the computing device includes a robot service configured to: execute, upon any one of a plurality of computing APIs being called, processing according to the called computing API, the plurality of computing APIs being APIs callable by the application; and relay communication between the application and the robot drive device depending on the processing to be executed.

A manufacturing method according to another aspect of the present disclosure is a method of manufacturing a system for controlling a robot, the method including: generating, based on an interface definition language (IDL), a server-side stub code that is executed according to a called computing API upon any one of a plurality of computing APIs being called by RPC; generating, as a service program including the stub code, a robot service that executes processing according to the called computing API and relays communication between an application and a robot drive device depending on the processing to be executed; and storing the service program in a computing device to enable the service program to be executed by calling the computing API by RPC from the application executed by the computing device, the computing device being configured to perform network communication with the robot drive device.

A program according to still another aspect of the present disclosure is for a computing device, the computing device being configured to perform network communication with a robot drive device that drives a robot and to execute an application necessary for control of the robot by the robot drive device, the program being configured to cause the computing device to configure: a plurality of computing APIs, which are APIs callable by the application; and a robot service configured to: execute, upon any one of the plurality of computing APIs being called, processing according to the called computing API; and relay communication between the application and the robot drive device depending on the processing to be executed.

### Advantageous Effects of Invention

The present disclosure provides a system beneficial for functional expansion of a robot.

### Brief Description of Drawings

[FIG. 1] FIG. 1 is a diagram schematically illustrating a configuration of a robot system.
[FIG. 2] FIG. 2 is a block diagram illustrating an example of functional configurations of a computing device and a robot drive device.
[FIG. 3] FIG. 3 is a block diagram illustrating an example of hardware configurations of the computing device and the robot drive device.
[FIG. 4] FIG. 4 is a flowchart illustrating an example of a request handling procedure in the computing device.
[FIG. 5] FIG. 5 is a flowchart illustrating an example of a processing procedure including communication with the robot drive device.
[FIG. 6] FIG. 6 is a flowchart illustrating an example of a non-cyclic communication procedure.
[FIG. 7] FIG. 7 is a flowchart illustrating an example of a request handling procedure in the robot drive device.
[FIG. 8] FIG. 8 is a flowchart illustrating an example of a cyclic communication procedure in the robot drive device.
[FIG. 9] FIG. 9 is a flowchart illustrating an example of a cyclic communication procedure in the computing device.
[FIG. 10] FIG. 10 is a flowchart illustrating an example of a service program implementation procedure.
[FIG. 11] FIG. 11 is a flowchart illustrating an example of an application implementation procedure.

### Description of Embodiments

Hereinafter, embodiments will be described in detail with reference to the drawings. In the description, the same reference signs are assigned to the same elements or elements having the same functions, and redundant description is omitted.

### [Robot System]

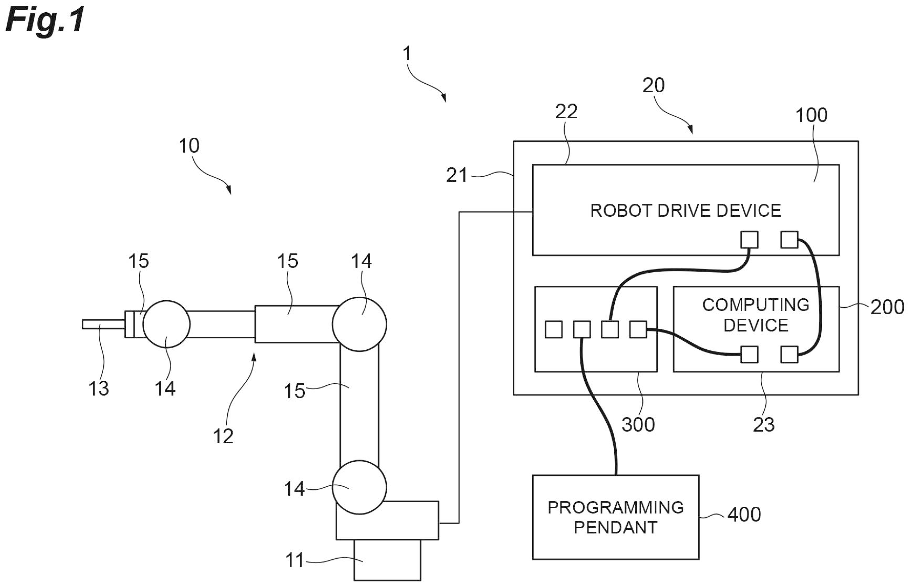

The robot system 1 illustrated in FIG. 1 is a system that causes a robot 10 to execute various tasks. Examples of tasks to be executed by the robot 10 include conveyance of a workpiece, processing of a workpiece, and assembly of a workpiece in an industrial production line. For example, the robot system 1 includes a robot 10 and a control system 20. The robot 10 is, for example, a vertical articulated robot and has a base 11, an articulated arm 12, and an end effector 13. The base 11 is installed on a floor surface, a wall surface, a ceiling surface, or the like of a work area of the robot 10. The base 11 may be installed on a mobile body such as an automated guided vehicle. The articulated arm 12 is connected to the base 11. The articulated arm 12 has a plurality of links 15 connected in series from the base 11 at a plurality of joints 14. The end effector 13 is connected to a distal end portion of the articulated arm 12 and acts on a workpiece for the above-described tasks. Examples of the end effector 13 include a hand for gripping a workpiece, a suction part for sucking a workpiece, a tool for processing a workpiece, and a tool for assembling a workpiece (for example, a fastening tool, a welding tool, etc.). The articulated arm 12 changes the position and posture of the end effector 13 by changing the respective angles of the plurality of joints 14 with an actuator such as an electric actuator. The configuration of the robot 10 is an example and can be changed. For example, the robot 10 may be a SCARA-type robot.

The control system 20 is a system that controls the robot 10. For example, the control system 20 has a robot drive device 100 and a computing device 200. The robot drive device 100 drives the robot 10. For example, the robot drive device 100 drives the plurality of joints 14 of the articulated arm 12 and the end effector 13. For example, the robot drive device 100 repeats a control cycle at a constant drive period, the control cycle including acquiring feedback information representing a state of the robot 10 (for example, respective angles of the plurality of joints 14), and driving the robot 10 so as to reduce a difference between a target state of the robot 10 and the state of the robot 10 based on the feedback information. Driving the robot 10 includes, for example, supplying drive power to a plurality of actuators that respectively drive the plurality of joints 14. Driving the robot 10 includes causing the robot 10 to maintain a constant posture by supplying drive power to the plurality of actuators.

The computing device 200 performs network communication with the robot drive device 100. The computing device 200 is capable of executing an application necessary for control of the robot 10 by the robot drive device 100. Network communication is digital communication performed by identifying a counterpart through addressing using an IP address, a MAC address, or the like. The network communication is executed by a layered protocol such as a TCP/IP model or an OSI model. For example, the TCP/IP model has a network interface layer, an internet layer, a transport layer, and an application layer.

The application necessary for the control of the robot 10 is an application that generates information necessary for executing a target control. The application is executed, for example, while the robot drive device 100 is driving the robot 10. The period during which the robot drive device 100 is driving the robot 10 means a period during which the servo is on, and includes a period during which the robot 10 is caused to maintain a constant posture by the supply of drive power to the plurality of actuators.

For example, the application is a program that executes processing not included in a program executed by the robot drive device 100 (hereinafter referred to as a "robot program"). Examples of the application include a vision application, a force sense application, a path generation application, and the like, which are described below. The vision application is an application that performs image processing on an image captured by a camera provided on the robot 10 or a camera installed around the robot 10, and extracts information necessary for controlling the robot. Examples of the information necessary for controlling the robot include the position of a workpiece, the position of a peripheral device of the robot 10, and the like. The information extracted by the image processing is used for generating a motion path of the robot 10 and the like. The motion path is information that defines the transition of the position and posture of the end effector 13. The image processing may include a matrix operation suitable for execution by a GPU (Graphics Processing Unit). The force sense application is an application that generates an operation to be executed by the robot 10 according to a force detected by a force sensor. The path generation application is an application that generates a motion path of the robot 10 for executing a task by simulation (for example, interference check) based on the task desired to be executed by the robot 10 and a three-dimensional model of the robot 10 and peripheral objects. The simulation such as the interference check may include a matrix operation suitable for execution by a GPU (Graphics Processing Unit).

In the illustrated example, the control system 20 has a robot drive device 100, a computing device 200, and a network switch 300 housed in a housing 21 of the robot system 1, and a programming pendant 400 that can be used at a position away from the housing 21. The robot drive device 100 may be unitized by a sub-housing 22 or the like so that it can be put in and taken out of the housing 21 all at once. Similarly, the computing device 200 may be unitized by a sub-housing 23 or the like so that it can be put in and taken out of the housing 21 all at once. The programming pendant 400 is a device operated by an operator to teach the robot drive device 100 an operation to be executed by the robot 10. The programming pendant 400 may be configured by hardware specialized for motion teaching, or may be configured by a general-purpose computer such as a tablet computer and a teaching application. The network switch 300 is connected to each of the robot drive device 100, the computing device 200, and the programming pendant 400 by a LAN cable or the like, and transfers network communication data among the robot drive device 100, the computing device 200, and the programming pendant 400. For example, the network switch 300 transfers data based on a MAC address in the network interface layer of the TCP/IP model. The robot drive device 100 and the computing device 200 may be directly connected to each other in addition to the connection via the network switch 300. For example, the robot drive device 100 and the computing device 200 may be directly connected to each other by a LAN cable different from the LAN cable connecting the robot drive device 100 and the network switch 300 and the LAN cable connecting the computing device 200 and the network switch 300.

According to the control system 20, since resources necessary for robot control can be expanded from the robot drive device 100 to the computing device 200, various applications necessary for robot control can be readily constructed beyond the resource constraints of the robot drive device 100. However, in constructing an application in the computing device 200, not only coding of a function to be implemented but also specialized coding for causing the robot drive device 100 and the computing device 200 to communicate in accordance with the real-time property of the robot drive device 100 is required. In contrast, the computing device 200 is configured to: execute, upon any one of a plurality of computing APIs being called, processing according to the called computing API, the plurality of computing APIs being APIs callable by the application; and relay communication between the application and the robot drive device 100 depending on the processing to be executed. This encapsulates the communication between the application and the robot drive device 100, so that the application can be constructed without being conscious of communication with the robot drive device 100. Therefore, the burden at the time of constructing the application can be significantly reduced.

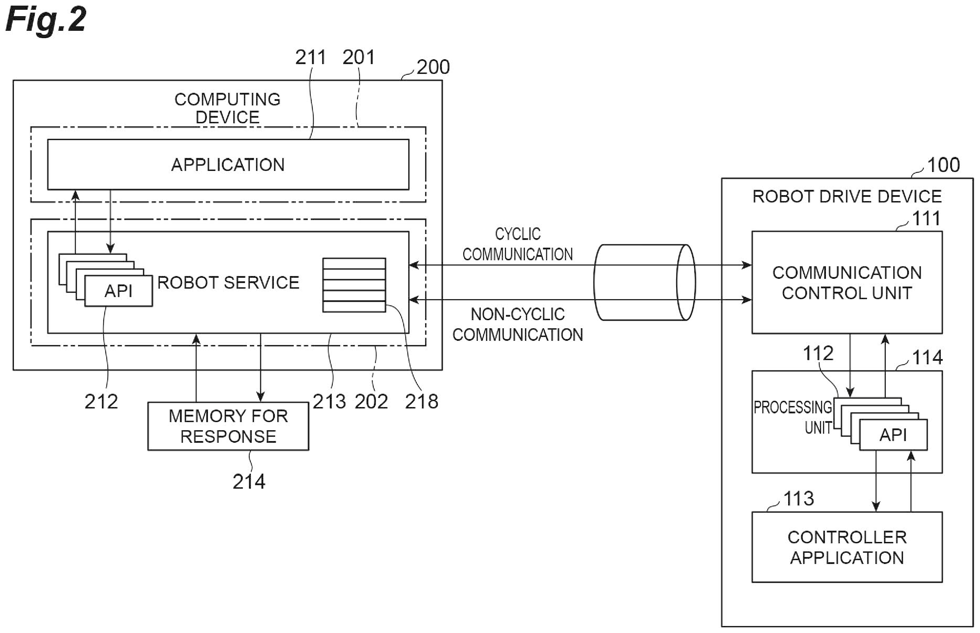

For example, as illustrated in FIG. 2, the computing device 200 has the above-described application 211 and a plurality of computing APIs 212. The computing device 200 may have a plurality of applications 211. Furthermore, the computing device 200 has a robot service 213 as a functional component (hereinafter, referred to as a "functional block"). Each of the plurality of computing APIs 212 is an API (Application Programming Interface) callable from the application 211. The robot service 213 executes, upon any one of the plurality of applications 211 being called, processing according to a called computing API. For example, the robot service 213 executes processing according to the called computing API while the robot drive device 100 is driving the robot 10. The computing device 200 may have a plurality of different applications 211, and the plurality of computing APIs 212 may be callable from each of the plurality of applications 211.

A plurality of processes with mutually different contents respectively correspond to the plurality of applications 211. The plurality of processes include a process including communication with the communication control unit 111 and a process not including communication with the communication control unit 111. Examples of the process not including communication with the communication control unit 111 include the following. Example 1) A process of notifying the application 211 of information already held by the robot service 213. Example 2) A process of notifying the application 211 of information acquired by the robot service 213 from another application 211. The process including communication may include a process that requires cyclic communication with the communication control unit 111 and a process that requires one-shot communication with the communication control unit 111.

Examples of the process that requires cyclic communication include the following.
Example 1-1) A process of notifying the application 211 of the above-described feedback information, drive power information, and the like for each control cycle.
Example 1-2) A process of notifying the application 211 of the status of a process being executed by the robot drive device 100 at the request of the application 211 for each control cycle.
Example 1-3) A process of transmitting a target posture of the robot 10 based on a motion path generated by the application 211 to the robot drive device 100 for each control cycle.

Examples of the process that requires one-shot communication include the following.
Example 2-1) A process of acquiring configuration information of the robot 10 and the like and notifying the application 211 of it.
Example 2-2) A process of writing settings from the application 211 to the robot drive device 100.
Example 2-3) A process of requesting servo-on from the application 211 to the robot drive device 100.
Example 2-4) A data set or the like that requests a one-shot operation from the application 211 to the robot drive device 100. The data set that requests a one-shot operation is, for example, an operation command that requests to move the robot 10 to a target posture.

The robot service 213 relays communication between the application 211 and the robot drive device 100 if the content of the processing corresponding to the application 211 called by the application 211 is communication processing. The robot service 213 may communicate data cyclically with the robot drive device 100 if the content of the processing requires cyclic communication, and may communicate data non-cyclically with the robot drive device 100 if the content of the processing requires one-shot communication. Hereinafter, communicating data cyclically is referred to as "cyclic communication," and communicating data non-cyclically is referred to as "non-cyclic communication." Since the cyclic communication and the non-cyclic communication are selectively used by the robot service 213, the application 211 can be constructed without being conscious of the selective use of the cyclic communication and the non-cyclic communication.

The cyclic communication may be a fixed-period communication that necessarily satisfies a fixed-period communication standard (for example, EtherCAT (registered trademark)), but does not necessarily have to be a strict fixed-period communication that satisfies a fixed-period communication standard. For example, the cyclic communication may be communication executed at a substantially fixed period based on a system timer of at least one of the robot drive device 100 and the computing device 200. Further, the cyclic communication may be executed at least in a cycle in which there is data to be transmitted, and may be omitted in a cycle in which there is no data to be transmitted. In the cyclic communication, the communication control unit 111 may repeatedly transmit first cyclic data to the robot service 213. The robot service 213 may repeatedly transmit second cyclic data to the communication control unit 111.

The robot drive device 100 may have a plurality of controller APIs 112. Furthermore, the robot drive device 100 may have a communication control unit 111 and a processing unit 114 as functional blocks. The communication control unit 111 controls communication with the computing device 200. The plurality of controller APIs 112 are APIs (Application Programming Interfaces) callable by the communication control unit 111. The processing unit 114 executes, upon any of the plurality of controller APIs 112 being called, a predefined process according to a called controller API 112.

A plurality of processes with mutually different contents respectively correspond to the plurality of controller APIs 112. Examples of the plurality of processes include the following.
(Example 3-1) A process of moving the robot 10 to a target posture.
(Example 3-2) A process of reading feedback information, drive power information, and the like.
(Example 3-3) A process of reading setting information (for example, setting information of control parameters) of the robot drive device 100 and the like.
(Example 3-4) A process of reading the contents of a memory (for example, a memory for input/output with an external device) of the robot drive device 100 and the like.

The robot service 213 may generate communication data requesting processing in the robot drive device 100 and transmit the communication data to the robot drive device 100 if the processing according to the called computing API 212 includes processing in the robot drive device 100. When the communication control unit 111 receives the communication data, it may cause the processing unit 114 to execute the processing in the robot drive device 100 by calling the controller API 112 corresponding to the communication data. Since a call to the computing API 212 is translated into a call to the controller API 112 as necessary, the processing in the robot drive device 100 can be executed by calling the computing API 212 with fewer constraints of the robot drive device 100, instead of calling the controller API 112 that is subject to the constraints of the robot drive device 100. Therefore, the burden on the application constructor can be significantly reduced. In other words, the computing API 212 can be made user-friendly for a vendor who constructs an application on the computing device 200 side, and the controller API 112 can be specified to bring out the performance of the robot drive device 100 corresponding to the constraint conditions of the robot drive device 100. Therefore, both improvement in the performance of the robot drive device 100 and the usability of the computing device 200 can be achieved.

The communication data is data that requests any one of a plurality of processes corresponding to the plurality of controller APIs 112. The communication data may be data that specifies any one of the plurality of controller APIs 112. However, at least some of the computing APIs 212 may be the same as the controller APIs 112. In this case, the robot service 213 may transmit the communication data representing the call of the computing API 212 to the robot drive device 100 as it is, and the communication control unit 111 may execute the received communication data as a call of the controller API 112 as it is.

The communication data may be data that requests to execute any of the plurality of processes and to transmit the processing result to the robot service 213. In this case, the communication control unit 111 may transmit the result of the processing executed by the processing unit 114 according to the called controller API 112 to the computing device 200. The processing result on the robot drive device 100 side can be returned to the computing device 200, and the processing result can be used by the application.

The request in the communication data to execute any of the plurality of processes and transmit the processing result to the robot service 213 may be a one-shot request or a cyclic request. The one-shot request is a request to execute any of the plurality of processes once and transmit the processing result to the robot service 213. The cyclic request is a request to repeatedly execute any of the plurality of processes and transmit the processing result to the computing API 212 each time it is executed.

The robot service 213 may transmit the communication data to the robot drive device 100 by the above-described non-cyclic communication. If the communication data includes a one-shot request, the communication control unit 111 transmits the processing result by the processing unit 114 to the computing device 200. For example, in the non-cyclic communication for transmitting the communication data, the communication control unit 111 includes the processing result in a response to the communication data and transmits it to the computing device 200. If the communication data includes a cyclic request, the communication control unit 111 repeatedly transmits the processing result by the processing unit 114 to the computing device 200. For example, the communication control unit 111 issues a response ID for the cyclic request, and in the non-cyclic communication for transmitting the communication data, includes the response ID in a response to the communication data and transmits it to the computing device 200. Thereafter, each time the processing by the processing unit 114 is executed, the communication control unit 111 attaches the issued response ID to the processing result, includes the processing result with the response ID in the first cyclic data, and transmits the first cyclic data to the robot service 213. Each time the robot service 213 receives the first cyclic data, it extracts the processing result to which the response ID is attached from the first cyclic data. The robot service 213 returns the processing result to the application that is the request source (the request source of the cyclic request corresponding to the response ID) based on the response ID.

The processing unit 114 may execute, upon any one of the plurality of controller APIs 112 being called by a controller application executed in the robot drive device 100, processing according to the called controller API 112 and return the processing result to the controller application. A process that can be called by the controller API 112 can be commonly used by the controller application and the application of the computing device.

For example, the robot drive device 100 may further have a controller application 113, and the plurality of controller APIs 112 may be callable from the controller application 113. The robot drive device 100 may have a plurality of controller applications 113, and the plurality of controller APIs 112 may be callable from each of the plurality of controller applications 113. The controller application 113 is a program that executes processing not included in the above-described robot program. If there are surplus resources in the robot drive device 100, the functions of the robot drive device 100 can also be expanded by the controller application 113. Therefore, various selections are available according to the content to be executed by the robot 10, as shown in Use Cases 1 to 4 below. Use Case 1) The robot 10 is operated only by the robot program. Use Case 2) The functions are expanded by the controller application 113 within the range of the resources of the robot drive device 100, and the robot 10 is operated. Use Case 3) The resources are expanded to the computing device 200, the functions are expanded by the application 211, and the robot 10 is operated. Use Case 4) The functions are expanded by a combination of an existing controller application 113 and an application 211 newly constructed in the computing device 200, and the robot 10 is operated.

Each of the plurality of computing APIs 212 may have a predetermined priority, and in transmitting data to the robot drive device 100 according to a called computing API 212, the robot service 213 may preferentially transmit data corresponding to the called computing API 212 having a higher priority to the robot drive device 100. The use of the robot service from a plurality of applications 211 can be allowed, and at the same time, a process with a high priority can be reliably executed.

The robot service 213 may perform network communication with the application 211 in addition to the network communication with the communication control unit 111. For example, the computing device 200 may include one or more virtualized containers, and the application 211 may be stored in any of the one or more containers. The one or more containers include an application container 201 capable of network communication with the robot service 213, and the application 211 may be stored in the application container 201. If the computing device 200 has a plurality of applications 211, the plurality of applications 211 may include two or more applications 211 stored in different application containers 201. The one or more containers further include a service container 202 capable of network communication with the application container 201, and the robot service 213 may be stored in the service container 202.

A container is a virtual execution environment that bundles libraries, configuration files, and the like necessary for the operation of an application into a single package, and allows the application to be executed independently from other containers or a host system (for example, an operating system). By using one or more containers, each application 211 can be executed in an execution environment virtually independent from other applications 211, without being constrained by other applications 211. Even in an independent execution environment, the processing by the robot service 213 can be executed by calling the plurality of computing APIs 212. Therefore, both the independence of the execution environment and the interoperability with the robot service 213 and other applications 211 can be achieved.

Each of the plurality of computing APIs 212 may be callable from the application 211 by RPC. The robot service 213 executes, upon any of the plurality of computing APIs 212 being called by RPC, processing according to a called computing API 212.

RPC (Remote Procedure Call) is a protocol for calling a program on a different computer via a network, and can execute a remote function or procedure as if it were being executed locally. RPC has language independence and enables communication even between programs written in different programming languages. RPC abstracts the details of communication, allowing an application constructor to call a remote procedure without being conscious of the complexity of the network. According to RPC, a remote function can be treated like a local function. For example, in using a Web API, it is necessary to code access to a URL and an HTTP request, but with RPC, a remote function can be called simply like a function call.

A system in which each of the plurality of computing APIs 212 is callable from the application 211 by RPC can readily and inexpensively support various programming languages, and can significantly reduce the burden on application constructors.

The robot service 213 may execute communication with the application 211 and communication with the communication control unit 111 at mutually independent timings. Hereinafter, communication with the application 211 is referred to as "first communication," and communication with the communication control unit 111 is referred to as "second communication." For example, the robot service 213 has a queue 218, and stores requests (requests by calling any of the plurality of computing APIs 212) received from one or more applications 211 by the first communication in the queue 218. The robot service 213 sequentially dequeues the requests stored in the queue 218 from the queue 218, and secures a memory 214 for response corresponding to the dequeued request. After securing the memory 214, if the processing corresponding to the dequeued request includes communication with the communication control unit 111, the robot service 213 transmits communication data including the request to the communication control unit 111 by the second communication, and stores a response (a response to a one-shot request or a response ID for a cyclic request) received from the communication control unit 111 in the memory 214. The robot service 213 reads the response from the memory 214 at a timing independent of the second communication. The robot service 213 returns the read response to the requesting application corresponding to the memory 214 by the first communication.

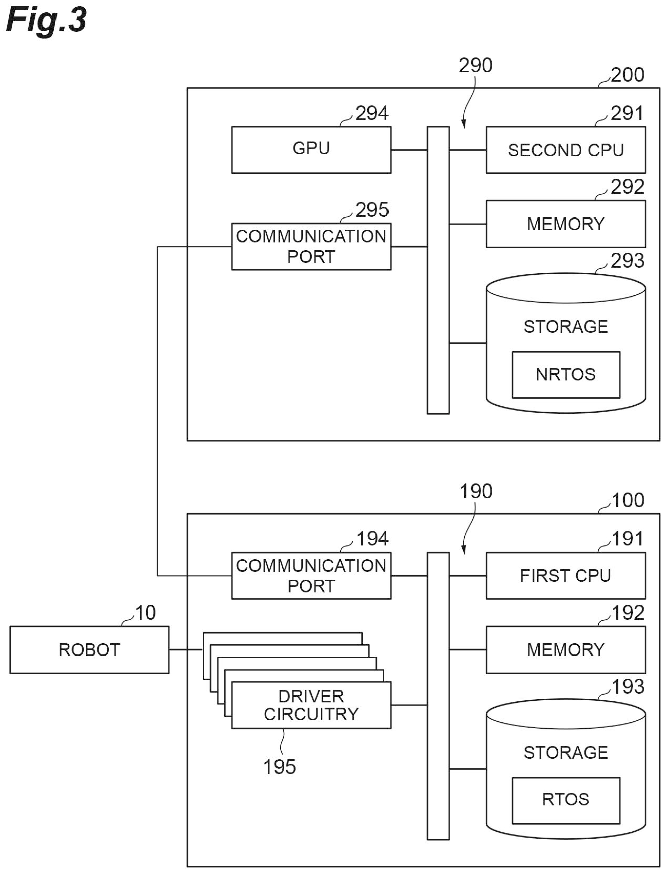

FIG. 3 is a diagram illustrating an example of hardware configurations of the robot drive device 100 and the computing device 200. As illustrated in FIG. 3, the robot drive device 100 includes circuitry 190, and the computing device 200 has circuitry 290. The circuitry 190 has a first CPU 191, a memory 192, a storage 193, a communication port 194, and driver circuitry 195. The storage 193 stores a program for executing cyclic communication and non-cyclic communication with the computing device 200 and controlling the robot 10. The program includes, for example, a real-time OS, the above-described robot program, and a program for causing the robot drive device 100 to configure the above-described plurality of controller APIs 112 and functional blocks. The storage 193 includes, for example, one or more non-volatile storage media. The non-volatile storage media include one or more storage devices. Examples of the one or more storage devices include a hard disk drive, a solid-state drive, a flash memory, and the like. The non-volatile storage media may include a portable storage medium such as an optical disc.

The memory 192 temporarily stores a program loaded from the storage 193. The memory 192 includes one or more volatile storage media. The volatile storage media include one or more memory devices. An example of the one or more memory devices is a random access memory. The first CPU 191 causes the robot drive device 100 to configure the above-described functional blocks by executing the program loaded into the memory 192. The first CPU 191 may temporarily store a calculation result in the memory 192. The first CPU 191 is a CPU (Centreal Processing Unit) and includes one or more arithmetic devices. The one or more arithmetic devices may be one or more cores.

The communication port 194 performs network communication with the computing device 200 in response to a request from the first CPU 191. The driver circuitry 195 supplies drive power to the plurality of actuators described above in response to a request from the first CPU 191.

The circuitry 290 includes a second CPU 291, a memory 292, a storage 293, a GPU 294, and communication ports 295 and 296. The storage 293 stores a program including an application necessary for controlling the robot 10. For example, the storage 293 stores a program that includes a non-real-time OS, and a program for causing the robot drive device 100 to configure the above-described plurality of computing APIs 212 and functional blocks.

The memory 292 temporarily stores a program loaded from the storage 293. The memory 292 includes one or more volatile storage media. The volatile storage media include one or more memory devices. An example of the one or more memory devices is a random access memory. The second CPU 291 causes the computing device 200 to configure the above-described functional blocks by executing the program loaded into the memory 292 in cooperation with the GPU 294 as necessary. The second CPU 291 and the GPU 294 may temporarily store a calculation result in the memory 292. The second CPU 291 includes one or more arithmetic devices. The one or more arithmetic devices may be, for example, one or more Central Processing Units, or may be one or more cores included in one Central Processing Unit. The GPU 294 includes, for example, one or more Graphics Processing Units specialized for parallel processing.

The communication port 295 performs network communication with the communication port 194 in response to a request from the second CPU 291. This enables the second CPU 291 to communicate with the first CPU 191.

The second CPU 291 may cause the GPU 294 to execute a matrix operation related to the generation of a path of the robot 10 (for example, the above-described motion path) while the first CPU 191 is controlling the robot 10. The first CPU 191 may cause the robot 10 to execute an operation along the path based on the calculation result by the second CPU 291 and the GPU 294. By making the matrix operation by the GPU 294 available for the generation of the path of the robot 10 while the first CPU 191 is controlling the robot, the functions of the robot 10 can be readily expanded.

The GPU 294 may perform, as the matrix operation, a matrix operation related to image processing for generating a path based on an image of the surrounding environment of the robot 10. The robot 10 can be controlled while reflecting the image processing result in the path.

The GPU 294 may perform, as the matrix operation, a matrix operation for checking for interference between the robot 10 and a peripheral object based on a model of the robot 10 and the peripheral object of the robot 10. The robot 10 can be controlled while reflecting the interference result between the robot 10 and the peripheral object in the path.

### [Control Procedure]

As an example of a control method, a control procedure executed by the control system 20 is illustrated. This control procedure includes: driving the robot by the robot drive device 100; executing, by the computing device 200, an application 211 necessary for control of the robot 10 in the robot drive device 100; executing, upon any one of the plurality of computing APIs 212 being called by the application 211, processing according to a called computing API 212; and relaying communication between the application 211 and the robot drive device 100 depending on the processing to be executed.

Hereinafter, the control procedure will be illustrated with reference to flowcharts. The illustrated control procedure includes a request handling procedure in the computing device 200, a non-cyclic communication procedure, a request handling procedure in the robot drive device 100, a cyclic communication procedure in the robot drive device 100, a cyclic communication procedure in the computing device 200, and a processing procedure by the controller API 112.

### (Request Handling Procedure in Computing Device)

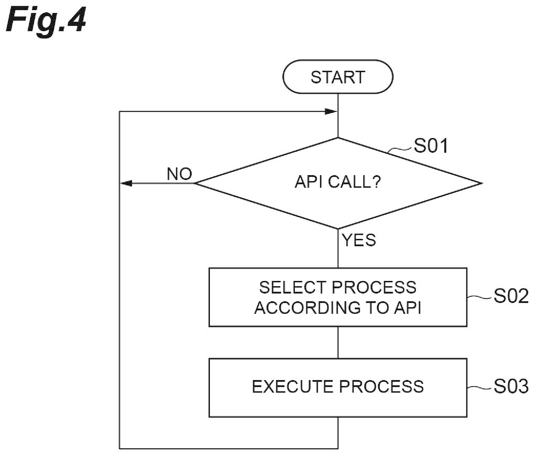

This procedure is a procedure in which the computing device 200 handles a request from the application 211 while the robot drive device 100 is driving the robot 10. As illustrated in FIG. 4, the computing device 200 executes steps S01, S02, and S03. In step S01, the robot service 213 waits for any of the plurality of computing APIs 212 to be called. In step S02, the robot service 213 selects a process according to the called computing API 212. In step S03, the robot service 213 executes the selected process. After executing step S03, the computing device 200 returns the process to step S01. The computing device 200 repeats the above processing.

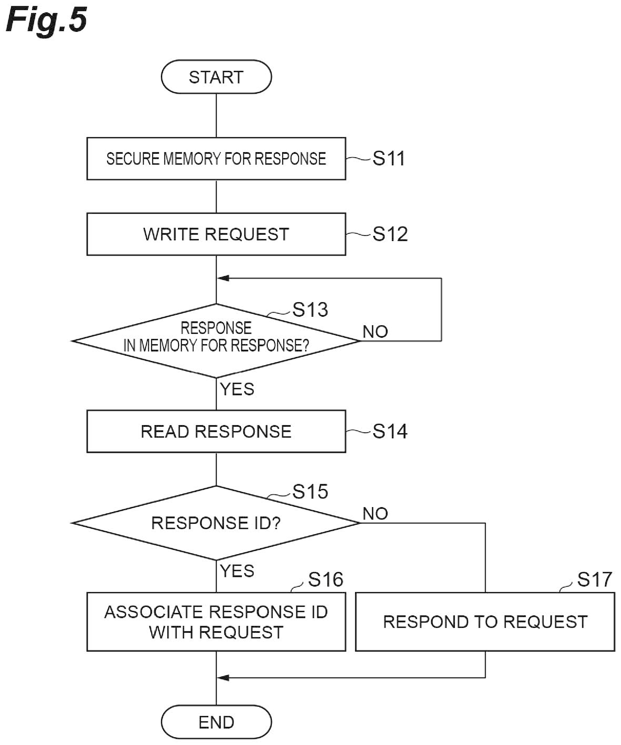

As described above, the processing executed by the robot service 213 in step S03 includes processing that includes communication with the communication control unit 111 and processing that does not include communication with the communication control unit 111. FIG. 5 is a flowchart illustrating a procedure of processing that includes communication with the communication control unit 111.

As illustrated in FIG. 5, the computing device 200 executes steps S11 and S12. In step S11, the robot service 213 secures a memory 214 for a response. In step S12, a request to be transmitted to the communication control unit 111 is written to the queue 218. The request written to the queue 218 is transmitted to the communication control unit 111 in a non-cyclic communication procedure described later. When a response to the request is received, it is written to the memory 214.

Next, the computing device 200 executes steps S13 and S14. In step S13, the robot service 213 waits for a response to be written to the memory 214. In step S14, the robot service 213 reads the response written to the memory 214.

Next, the computing device 200 executes step S15. In step S15, the robot service 213 checks whether the response read from the memory 214 is a response ID of a response by cyclic communication. If it is determined in step S15 that the read response is a response ID, the computing device 200 executes step S16. In step S16, the robot service 213 stores the response ID in association with the request being handled.

If it is determined in step S15 that the read response is not a response ID, the computing device 200 executes step S17. In step S17, the robot service 213 returns the response to the application 211 that is the source of the request being handled. With this, the processing including communication with the communication control unit 111 is completed.

### (Non-cyclic Communication Procedure)

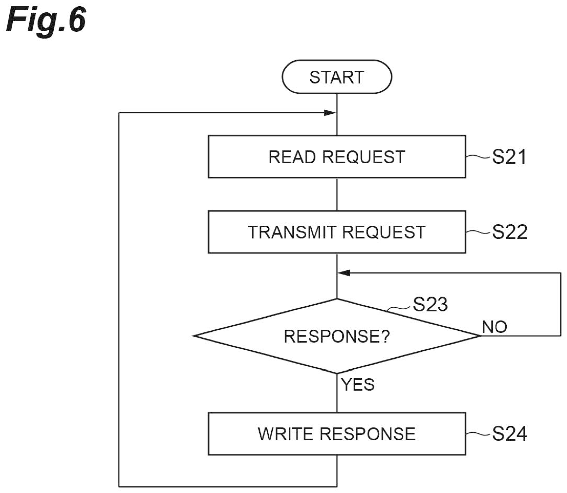

This procedure is a communication procedure executed by the computing device 200 in response to the request written to the queue 218 in step S12 described above. As illustrated in FIG. 6, the computing device 200 first executes steps S21 and S22. In step S21, the robot service 213 reads a request from the queue 218. In step S22, the robot service 213 transmits communication data including the read request to the communication control unit 111.

Next, the computing device 200 executes steps S23 and S24. In step S23, the robot service 213 waits for a response from the communication control unit 111. In step S24, the robot service 213 writes the response from the communication control unit 111 to the memory 214. Thereafter, the computing device 200 returns the process to step S21. The computing device 200 repeats the above processing.

### (Request Handling Procedure in Robot Drive Device)

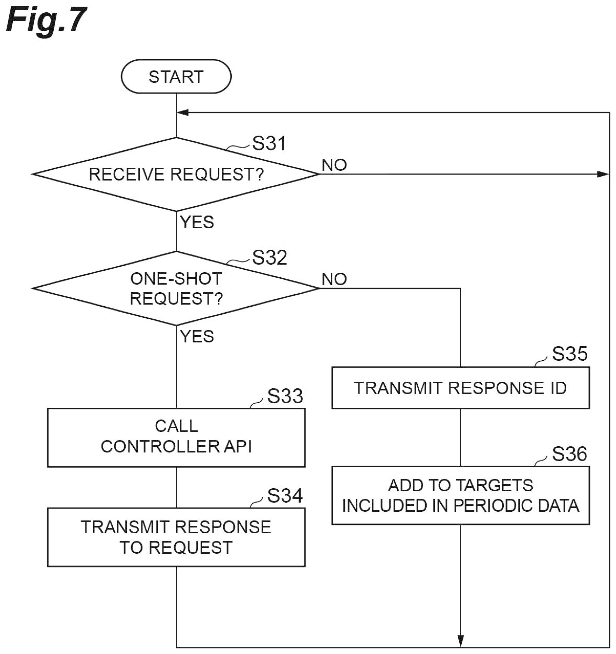

This procedure is a procedure in which the robot drive device 100 handles the request transmitted by the robot service 213 in step S22 described above. As illustrated in FIG. 7, the robot drive device 100 first executes steps S31 and S32. In step S31, the communication control unit 111 waits to receive a request. In step S32, the communication control unit 111 checks whether the request is one-shot.

If it is determined in step S32 that the request is one-shot, the robot drive device 100 executes steps S33 and S34. In step S33, the communication control unit 111 calls a controller API 112 corresponding to the received communication data to cause the processing unit 114 to execute processing. In step S34, the communication control unit 111 transmits the result of the processing executed by the processing unit 114 to the computing device 200 as a response to the request.

If it is determined in step S32 that the request is cyclic, the robot drive device 100 executes steps S35 and S36. In step S35, the communication control unit 111 issues a response ID for the cyclic request and transmits it to the robot service 213. In step S36, the communication control unit 111 adds a response to the request (for example, a processing result by the processing unit 114) to the target to be included in the first cyclic data. The response added to the target is included in the first cyclic data and transmitted by cyclic communication in a cyclic communication procedure described later. After executing step S34 or S36, the robot drive device 100 returns the process to step S31. The robot drive device 100 repeats the above processing.

### (Cyclic Communication Procedure in Robot Drive Device)

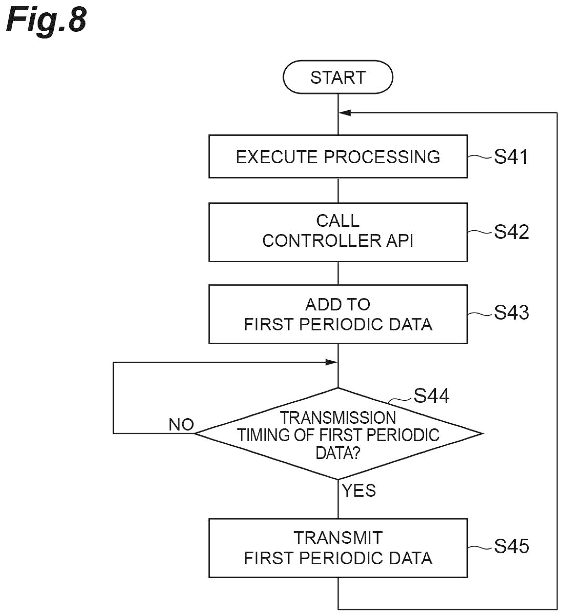

This procedure is a cyclic communication procedure executed by the robot drive device 100. As illustrated in FIG. 8, the robot drive device 100 executes steps S41, S42, S43, S44, and S45. In step S41, the processing unit 114 executes processing such as the above-described control cycle. In step S42, the communication control unit 111 calls a controller API 112 corresponding to the processing for acquiring the target to be included in the first cyclic data, and causes the processing unit 114 to execute the processing. In step S43, the communication control unit 111 attaches an issued response ID to the processing result by the processing unit 114, and adds the processing result with the response ID to the first cyclic data. In step S44, the communication control unit 111 waits for the transmission timing of the first cyclic data. The transmission timing of the first cyclic data is, for example, the timing at which the above-described control period elapses. In step S45, the communication control unit 111 transmits the first cyclic data to the robot service 213. Thereafter, the robot drive device 100 returns the process to step S41. The robot drive device 100 repeats the above processing.

### (Cyclic Communication Procedure in Computing Device)

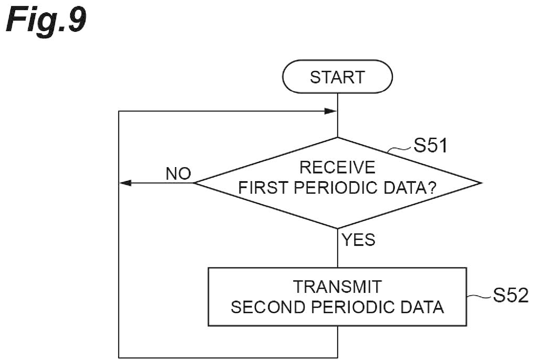

This procedure is a cyclic communication procedure executed by the computing device 200. As illustrated in FIG. 9, the computing device 200 executes steps S51 and S52. In step S51, the robot service 213 waits to receive the first cyclic data. In step S52, in response to the reception of the first cyclic data, the robot service 213 transmits the second cyclic data to the communication control unit 111. Thereafter, the computing device 200 returns the process to step S51. The computing device 200 repeats the above processing.

### [Manufacturing Procedure]

As an example of a manufacturing method, a procedure for manufacturing the robot system 1 is illustrated. This procedure is a procedure for manufacturing the robot system 1 by implementing a program in the computing device 200 in a state where the hardware of the robot 10 and the control system 20 is prepared. Hereinafter, the manufacturing procedure will be illustrated with reference to flowcharts. The illustrated manufacturing procedure includes a service program implementation procedure and an application program implementation procedure.

### (Service Program Implementation Procedure)

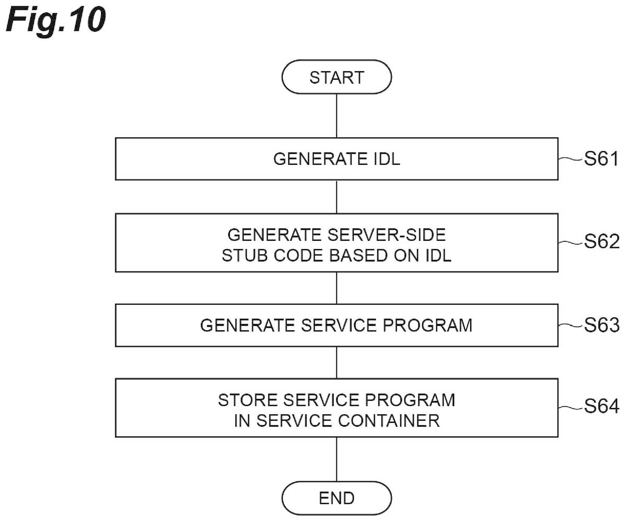

This procedure is executed in a state where the hardware of the robot 10 and the control system 20 is prepared. As illustrated in FIG. 10, the service program implementation procedure includes steps S61, S62, S63, and S64. In step S61, an IDL is generated.

IDL is an Interface Definition Language, which is a language for defining an interface to enable communication between different programming languages. IDL is used in RPC to automatically generate libraries, stub codes, etc. for each language, thereby realizing seamless communication even between programs written in different languages.

In step S62, upon any of the plurality of computing APIs 212 being called by RPC, a server-side stub code that is executed according to a called computing API 212 is generated based on the IDL. In step S63, a robot service 213 that executes processing according to the called computing API 212 and relays communication between the application 211 and the robot drive device 100 according to the content of the processing to be executed is generated as a service program including the stub code. In step S64, the service program is stored in the computing device 200 so as to enable the service program to be executed by calling the computing API 212 by RPC from an application 211 executed by the computing device 200 that performs network communication with the robot drive device 100. Storing the service program in the computing device 200 may include storing the service program in any of the one or more containers described above (for example, the service container 202 described above).

### (Application Program Implementation Procedure)

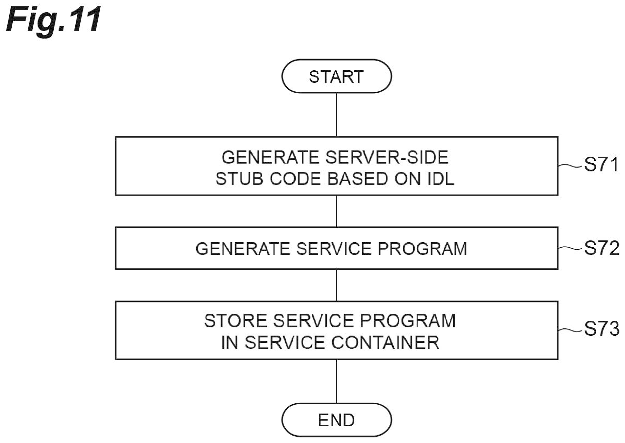

This procedure is executed in a state where the service program is implemented in the computing device 200. As illustrated in FIG. 11, the application program implementation procedure includes steps S71, S72, and S73. In step S71, a client-side stub code for calling the service program, which corresponds to a specified programming language, is generated based on the IDL already generated in step S61. The client-side stub code is, for example, a library that can be imported in the coding of an application program. In step S72, an application program as the application 211 is generated using (for example, by importing) the client-side stub code (library). In step S73, the application program is stored in the computing device 200. Storing the application program in the computing device 200 may include storing the application program in any of the one or more containers described above (for example, the application container 201 described above).

### [Conclusion]

(1) A robot system 1, including: a robot drive device 100 configured to drive a robot 10; and a computing device 200 configured to perform network communication with the robot drive device 100 and capable of executing an application 211 necessary for control of the robot 10 by the robot drive device 100, wherein the computing device 200 includes a robot service 213 configured to: execute, upon any one of a plurality of computing APIs 212 being called, processing according to the called computing API 212, the plurality of computing APIs 212 being APIs callable by the application; and relay communication between the application 211 and the robot drive device 100 depending on the processing to be executed. According to this robot system 1, since the robot service 213 encapsulates the communication between the application 211 and the robot drive device 100, the application 211 can be constructed without being conscious of communication with the robot drive device 100. Therefore, the burden at the time of constructing the application 211 can be significantly reduced.
(2) The robot system 1 according to (1), wherein the robot drive device 100 includes: a communication control unit 111 configured to control communication with the computing device 200; and a processing unit 114 configured to execute, upon any one of a plurality of controller APIs 112 being called, predefined processing according to the called controller API 112, the controller APIs 112 being APIs callable by the communication control unit 111, wherein the robot service 213 is configured to generate, if the processing according to the called computing API 212 includes processing in the robot drive device 100, communication data requesting processing in the robot drive device 100 and transmit the communication data to the robot drive device 100, and wherein the communication control unit 111 is configured to cause, in response to receiving the communication data, the processing unit 114 to execute the processing in the robot drive device 100 by calling a controller API 112 corresponding to the communication data. According to this robot system 1, since a call to the computing API 212 is translated into a call to the controller API 112 as necessary, the processing in the robot drive device 100 can be executed by calling the computing API 212 with fewer constraints of the robot drive device 100, instead of calling the controller API 112 that is subject to the constraints of the robot drive device 100. Therefore, the burden on the constructor of the application 211 can be significantly reduced. In other words, the computing API 212 can be made user-friendly for a vendor who constructs the application 211 on the computing device 200 side, and the controller API 112 can be specified to bring out the performance of the robot drive device 100 corresponding to the constraint conditions of the robot drive device 100. Therefore, both improvement in the performance of the robot drive device 100 and the usability of the computing device 200 can be achieved. However, at least some of the computing APIs 212 may be the same as the controller APIs 112, and in that case, the robot service 213 may transmit the call of the computing API 212 to the robot drive device 100 as it is, and the communication control unit 111 may also execute the received call of the computing API 212 as it is.
(3) The robot system 1 according to (2), wherein the communication control unit 111 is configured to transmit, to the computing device 200, the result of the processing executed by the processing unit 114 according to the called controller API 112. According to this robot system 1, the processing result on the robot drive device 100 side can be returned to the computing device 200, and the processing result can be used by the application 211.
(4) The robot system 1 according to (2) or (3), wherein the processing unit 114 is configured to execute, upon any one of the plurality of controller APIs 112 being called by a controller application 113 executed in the robot drive device 100, processing according to the called controller API 112 and return the processing result to the controller application 113. According to this robot system 1, a process that can be called by the controller API 112 can be commonly used by the controller application 113 and the application 211 of the computing device 200.
(5) The robot system 1 according to any one of (2) to (4), wherein each of the plurality of computing APIs 212 has a predetermined priority, and wherein the robot service 213 is configured to, in transmitting data to the robot drive device 100 according to the called computing API 212, preferentially transmit data with a higher priority of the called computing API 212 to the robot drive device 100. According to this robot system 1, the use of the robot service 213 from a plurality of applications 211 can be allowed, and at the same time, a process with a high priority can be reliably executed.
(6) The robot system 1 according to any one of (1) to (5), wherein each of the plurality of computing APIs 212 is callable from the application 211 by remote procedure call (RPC), and wherein the robot service 213 is configured to execute, upon any one of the plurality of computing APIs 212 being called by RPC, processing according to the called computing API 212. According to this robot system 1, various programming languages can be readily and inexpensively supported and the burden on the constructor of the application 211 can be significantly reduced.
(7) The robot system 1 according to (6), wherein the computing device 200 is a device manufactured by operations including: generating, based on an interface definition language (IDL), a server-side stub code that is executed according to a called computing API 212 upon any of the plurality of computing APIs 212 being called by RPC; generating, as a service program including the stub code, the robot service 213 configured to execute processing according to the called computing API 212; and storing the service program to enable the service program to be executed by calling any one of the plurality of computing APIs 212 by RPC from the application 211. According to this robot system 1, various programming languages can be supported more readily.
(8) The robot system 1 according to any one of (1) to (7), wherein the computing device 200 includes one or more virtualized containers, and the application 211 is stored in any one of the one or more containers. By using a plurality of containers, each application 211 can be executed in an execution environment virtually independent from other applications 211, without being constrained by other applications 211. Even in an independent execution environment, the processing by the robot service 213 can be executed by calling the plurality of computing APIs 212. Therefore, both the independence of the execution environment and the interoperability with the robot service 213 and other applications 211 can be achieved.
(9) The robot system 1 according to any one of (1) to (8), wherein the robot service 213 is configured to: communicate data with the robot drive device 100 on a cyclic basis if the processing requires cyclic communication; and communicate data with the robot drive device 100 on a non-cyclic basis if the processing requires one-shot communication. Since the cyclic communication and the non-cyclic communication are selectively used by the robot service 213, the application 211 can be constructed without being conscious of the selective use of the cyclic communication and the non-cyclic communication.
(10) A manufacturing method of a system for controlling a robot 10, the method including: generating, based on an interface definition language (IDL), a server-side stub code that is executed according to a called computing API 212 upon any one of a plurality of computing APIs 212 being called by RPC; generating, as a service program including the stub code, a robot service 213 configured to execute processing according to the called computing API 212 and relay communication between an application 211 and a robot drive device 100 depending on the processing to be executed; and storing the service program in a computing device 200 to enable the service program to be executed by calling the computing API 212 by RPC from the application 211 executed by the computing device 200, the computing device 200 being configured to perform network communication with the robot drive device 100. According to this manufacturing method, a system that readily and inexpensively supports various programming languages and significantly reduces the burden on the constructor of the application 211 can be manufactured.
(11) The manufacturing method according to (10), wherein the computing device 200 includes one or more virtualized containers, and storing the service program in the computing device 200 includes storing the service program in any one of the one or more containers.
(12) The manufacturing method according to (10), further including: generating, based on the IDL, a client-side stub code for calling the service program, the client-side stub code corresponding to a specified programming language; generating an application program as the application 211 using the client-side stub code; and storing the application program in the computing device 200. According to this manufacturing method, a system to which functions are added by the application 211 can be readily manufactured.
(13) The manufacturing method according to (12), wherein the computing device 200 includes a plurality of virtualized containers, wherein the plurality of containers include a service container and an application container that can communicate with each other, wherein storing the service program in the computing device 200 includes storing the service program in the service container, and wherein storing the application 211 in the computing device 200 includes storing the application program in the application container.
(14) A program for causing a computing device 200, the computing device 200 being configured to perform network communication with a robot drive device 100 that drives a robot 10 and to execute an application 211 necessary for control of the robot 10 by the robot drive device 100, the program being configured to cause the computing device 200 to configure: a plurality of computing APIs 212, which are APIs callable by the application 211; and a robot service 213 configured to: execute, upon any one of the plurality of computing APIs 212 being called, processing according to the called computing API 212; and relay communication between the application 211 and the robot drive device 100 depending on the processing to be executed.

Although the embodiments have been described above, the present disclosure is not necessarily limited to the above-described embodiments, and various modifications can be made without departing from the gist thereof.

### Reference Signs List

1: robot system, 10: robot, 100: robot drive device, 200: computing device, 211: application, 212: computing API, 213: robot service, 111: communication control unit, 112: controller API, 114: processing unit, 113: controller application.

## Claims

1. A robot system, comprising:
a robot drive device configured to drive a robot; and
a computing device configured to perform network communication with the robot drive device and capable of executing an application necessary for control of the robot by the robot drive device,
wherein the computing device comprises a robot service configured to:
execute, upon any one of a plurality of computing APIs being called, processing according to the called computing API, the plurality of computing APIs being APIs callable by the application; and
relay communication between the application and the robot drive device depending on the processing to be executed.

2. The robot system according to claim 1, wherein the robot drive device comprises:
a communication control unit configured to control communication with the computing device; and
a processing unit configured to execute, upon any one of a plurality of controller APIs being called, predefined processing according to the called controller API, the controller APIs being APIs callable by the communication control unit,
wherein the robot service is configured to generate, if the processing according to the called computing API includes processing in the robot drive device, communication data requesting the processing in the robot drive device and transmit the communication data to the robot drive device, and
wherein the communication control unit is configured to cause, in response to receiving the communication data, the processing unit to execute the processing in the robot drive device by calling a controller API corresponding to the communication data.

3. The robot system according to claim 2, wherein the communication control unit is configured to transmit, to the computing device, a result of processing executed by the processing unit according to the called controller API.

4. The robot system according to claim 2, wherein the processing unit is configured to execute, upon any one of the plurality of controller APIs being called by a controller application executed in the robot drive device, processing according to the called controller API and return a processing result to the controller application.

5. The robot system according to claim 2, wherein each of the plurality of computing APIs has a predetermined priority, and
wherein the robot service is configured to, in transmitting data to the robot drive device according to the called computing API, preferentially transmit data corresponding to the called computing API having a higher priority to the robot drive device.

6. The robot system according to claim 1, wherein each of the plurality of computing APIs is callable from the application by remote procedure call (RPC), and
wherein the robot service is configured to execute, upon any one of the plurality of computing APIs being called by RPC, processing according to the called computing API.

7. The robot system according to claim 6, wherein the computing device is a device manufactured by operations comprising:
generating, based on an interface definition language (IDL), a server-side stub code that is executed according to a called computing API upon any of the plurality of computing APIs being called by RPC;
generating, as a service program including the stub code, the robot service configured to execute processing according to the called computing API; and
storing the service program to enable the service program to be executed by calling any one of the plurality of computing APIs by RPC from the application.

8. The robot system according to any one of claims 1 to 6, wherein the computing device comprises one or more virtualized containers, and
wherein the application is stored in any one of the one or more containers.

9. The robot system according to any one of claims 1 to 6, wherein the robot service is configured to:
communicate data with the robot drive device on a cyclic basis if the processing requires cyclic communication; and
communicate data with the robot drive device on a non-cyclic basis if the processing requires one-shot communication.

10. A manufacturing method of a system for controlling a robot, the method comprising:
generating, based on an interface definition language (IDL), a server-side stub code that is executed according to a called computing API upon any one of a plurality of computing APIs being called by RPC;
generating, as a service program including the stub code, a robot service configured to execute processing according to the called computing API and relay communication between an application and a robot drive device depending on the processing to be executed; and
storing the service program in a computing device to enable the service program to be executed by calling the computing API by RPC from the application executed by the computing device, the computing device being configured to perform network communication with the robot drive device.

11. The manufacturing method according to claim 10, wherein the computing device comprises one or more virtualized containers, and
wherein storing the service program in the computing device comprises storing the service program in any one of the one or more containers.

12. The manufacturing method according to claim 10, further comprising:
generating, based on the IDL, a client-side stub code for calling the service program, the client-side stub code corresponding to a specified programming language;
generating an application program as the application using the client-side stub code; and
storing the application program in the computing device.

13. The manufacturing method according to claim 12, wherein the computing device comprises a plurality of virtualized containers,
wherein the plurality of containers comprise a service container and an application container that can communicate with each other,
wherein storing the service program in the computing device comprises storing the service program in the service container, and
wherein storing the application in the computing device comprises storing the application program in the application container.

14. A program for a computing device, the computing device being configured to perform network communication with a robot drive device that drives a robot and to execute an application necessary for control of the robot by the robot drive device, the program being configured to cause the computing device to configure:
a plurality of computing APIs, which are APIs callable by the application; and
a robot service configured to:
execute, upon any one of the plurality of computing APIs being called, processing according to the called computing API; and
relay communication between the application and the robot drive device depending on the processing to be executed.
